# FASCICULE DE BREVET EUROPEEN

(11) **EP 3 160 823 B1**
(45) Date de publication et mention de la délivrance du brevet: **06.03.2019**
(21) Numéro de dépôt: 15733847.6
(22) Date de dépôt: 19.06.2015
(51) Int. Cl.: B62D 1/28, B62D 5/04, B62D 6/00, B62D 15/02

(54) **ASSISTANCE DE DIRECTION MIXTE COMPRENANT UNE BOUCLE D'ASSERVISSEMENT EN COUPLE PILOTÉE EN CONSIGNE PAR UN CONTRÔLEUR DÉPOSITION DESTINÉ A L'ASSERVISSEMENT EN TRAJECTOIRE**
GEMISCHTE SERVOLENKUNG MIT EINER DREHMOMENTREGLERSCHLEIFE, DIE ZU EINEM SOLLWERT DURCH EIN POSITIONSSTEUERGERÄT ZUR TRAJEKTORIESTEUERUNG GESTEUERT WIRD
MIXED POWER STEERING COMPRISING A TORQUE CONTROL LOOP CONTROLLED TO A SETPOINT BY A POSITION CONTROLLER INTENDED FOR TRAJECTORY CONTROL

(30) Priorité: 24.06.2014 FR 1455841
(43) Date de publication de la demande: 03.05.2017
(73) Titulaire: JTEKT Europe, 69540 Irigny (FR)
(72) Inventeur: MORETTI, Romain, 69510 Thurins (FR); LEYDIER, Luc, 69300 Caluire et Cuire (FR)
(74) Mandataire: Chevalier, Renaud Philippe
(86) Numéro de dépôt international: PCT/FR2015/051626
(87) Numéro de publication internationale: WO 2015/197951

(56) Documents cités:
- EP-A2- 0 567 991
- EP-A2- 2 949 546
- JP-A- H1 178 948
- US-A- 5 925 082
- US-A1- 2012 185 132
- US-B1- 6 324 452

## Description

La présente invention concerne les procédés destinés à la gestion de directions assistées équipant des véhicules, et notamment des véhicules automobiles.

La présente invention concerne plus particulièrement les procédés de gestion de directions assistées où coexistent d'une part des fonctions classiques d'assistance à la manoeuvre du volant, destinées typiquement à fournir, au moyen d'un moteur d'assistance, un couple d'assistance qui amplifie le couple exercé manuellement par le conducteur sur le volant de conduite afin de soulager le conducteur lors des manoeuvres de braquage de la direction, et d'autre part des fonctions d'aide à la conduite (fonctions de pilotage automatique), telle que les fonctions d'aide au stationnement, qui commandent automatiquement la trajectoire du véhicule. Le document JPH1178948 est considéré comme l'art antérieur le plus proche selon le préambule des revendications 1 et 9.

Les fonctions d'aide à la conduite de type pilotage automatique, telles que l'aide au stationnement (« city park ») ou l'aide au maintien du véhicule dans sa voie de circulation (« lane keeping ») tendent à se multiplier, afin d'améliorer la sécurité et le confort des utilisateurs de véhicules automobiles.

Cependant, leur intégration ne vas pas sans poser quelques difficultés, dans la mesure où, par nature, ces fonctions de pilotage automatique agissent de manière autonome, en commandant d'elles-mêmes la configuration de la direction qui permettra de suivre une trajectoire de référence déterminée par leurs soins, ce qui les amène fréquemment à s'opposer à toute manoeuvre d'origine manuelle (liée à une intervention du conducteur), et par conséquent à s'opposer aux fonctions classiques d'assistance à la manoeuvre qui, elles, obéissent aux actions du conducteur.

Ainsi, on comprendra aisément, par exemple, que si une fonction d'aide au maintien du véhicule dans sa trajectoire tend à rappeler le véhicule vers la droite, tandis que, simultanément, le conducteur souhaite changer de voie ou bifurquer en tirant le volant vers la gauche, les deux types d'action vont s'opposer, au préjudice du confort de manoeuvre, voire au préjudice de la sécurité des occupants du véhicule.

Un compromis peut consister à laisser les fonctions de pilotage automatique et les fonctions d'assistance agir simultanément, chacune définissant respectivement sa propre consigne de pilotage du moteur d'assistance, puis à réaliser la somme desdites consignes, c'est-à-dire à réaliser la somme des contributions respectives de chacune desdites fonctions, pour définir une consigne globale qui sera alors appliquée au moteur d'assistance.

Un tel compromis présente toutefois l'inconvénient de générer systématiquement une consigne "moyenne", qui oppose en permanence des contributions issues de fonctions antinomiques.

Ceci tend à dégrader globalement les performances individuelles de l'ensemble desdites fonctions, en empêchant notamment l'une ou l'autre desdites fonctions de s'exprimer pleinement, sans être perturbée par l'autre fonction, et ce même lorsque le véhicule se trouve ponctuellement dans une situation de vie qui pourrait être entièrement gérée, de façon optimale, par une seule fonction, agissant individuellement.

Selon une autre possibilité, on peut envisager d'activer (ou, respectivement, d'inhiber) sélectivement la fonction d'assistance à la manoeuvre ou la fonction de pilotage automatique, selon la situation de vie dans laquelle se trouve le véhicule.

La difficulté tient alors d'une part à détecter la situation de vie dans laquelle se trouve le véhicule, et d'autre part à assurer, en cas de changement de situation de vie, une transition convenable entre une gestion par fonction de pilotage automatique et une gestion par fonction d'assistance à la manoeuvre manuelle (ou inversement).

En effet, de telles transitions sont potentiellement génératrices d'instabilités, lesquelles instabilités peuvent être préjudiciables au confort de manoeuvre voire au comportement du véhicule, et donc à la sécurité des occupants dudit véhicule ou des autres usagers de la route.

Par ailleurs, la gestion de la direction est encore compliquée par la nécessité de prendre en considération l'état lâché ou tenu du volant de conduite, notamment afin de ne pas risquer de provoquer une torsion du poignet ou du bras du conducteur sous l'effet d'un pilotage automatique trop puissant, lorsque le conducteur tient fermement le volant en mains (c'est-à-dire lorsque l'on se trouve en situation de « volant tenu »).

Les objets assignés à l'invention visent par conséquent à remédier aux inconvénients susmentionnés et à proposer un nouveau procédé de gestion de direction assistée qui permette de concilier fonctions d'assistance à la manoeuvre et fonctions de pilotage automatique pour l'aide à la conduite, et qui optimise ainsi l'assistance de direction, tant au niveau du confort que de la sécurité, dans toutes les situations de vie du véhicule.

Les objets assignés à l'invention sont définis par les caractéristiques des revendications 1 à 10 et sont atteints au moyen d'un procédé de gestion d'une direction assistée comprenant au moins un volant de conduite et au moins un moteur d'assistance, ledit procédé étant caractérisé en ce qu'il comprend une étape (b) d'asservissement en couple conducteur, au cours de laquelle on mesure le couple conducteur effectif qui est réellement exercé, à l'instant considéré, par le conducteur sur le volant de conduite, puis l'on compare ledit couple conducteur effectif à une consigne de couple conducteur prédéterminée afin d'évaluer un écart de couple conducteur qui correspond à la différence entre le couple conducteur effectif et ladite consigne de couple conducteur, puis l'on détermine, à partir de cet écart de couple conducteur, une consigne de couple moteur destinée à être appliquée au moteur d'assistance en vue de réduire ledit écart de couple conducteur, et en ce que la consigne de couple conducteur qui est utilisée lors de l'étape (b) d'asservissement en couple conducteur est générée lors d'une étape (a) d'asservissement en trajectoire, au cours de laquelle on mesure la valeur effective d'au moins un paramètre dit « paramètre de trajectoire », qui est représentatif de la trajectoire effective du véhicule, puis l'on compare ce paramètre de trajectoire à une consigne de trajectoire, qui est prédéterminée en fonction d'une trajectoire de référence que l'on souhaite automatiquement faire suivre au véhicule, afin d'évaluer un écart de trajectoire qui correspond à la différence entre ladite consigne de trajectoire et la valeur effective du paramètre de trajectoire, puis l'on détermine, à partir de cet écart de trajectoire, une consigne de couple conducteur destinée à réduire ledit écart de trajectoire. Les objets assignés à l'invention sont plus particulièrement atteints au moyen d'un procédé de gestion d'une direction assistée comprenant au moins un volant de conduite et au moins un moteur d'assistance, ledit procédé étant caractérisé en ce qu'il comprend une étape (b) d'asservissement en couple conducteur, au cours de laquelle on mesure le couple conducteur effectif qui est réellement exercé, à l'instant considéré, par le conducteur sur le volant de conduite, puis l'on compare ledit couple conducteur effectif à une consigne de couple conducteur prédéterminée afin d'évaluer un écart de couple conducteur qui correspond à la différence entre le couple conducteur effectif et ladite consigne de couple conducteur, puis l'on détermine, à partir de cet écart de couple conducteur, une consigne de couple moteur destinée à être appliquée au moteur d'assistance en vue de réduire ledit écart de couple conducteur, et en ce que la consigne de couple conducteur qui est utilisée lors de l'étape (b) d'asservissement en couple conducteur est générée lors d'une étape (a) d'asservissement en trajectoire, au cours de laquelle on mesure (en tant que paramètre de trajectoire) la position effective de la direction assistée, puis l'on compare cette position effective à une consigne de position (formant consigne de trajectoire), qui est prédéterminée en fonction d'une trajectoire de référence que l'on souhaite automatiquement faire suivre au véhicule, afin d'évaluer un écart de position (formant écart de trajectoire) qui correspond à la différence entre ladite consigne de position et la position effective de la direction, puis l'on détermine, à partir de cet écart de position, une consigne de couple conducteur destinée à réduire ledit écart de position.

Avantageusement, l'invention propose donc une nouvelle architecture de gestion selon laquelle la fonction de pilotage automatique, dite également « fonction de contrôle de position », qui réalise l'asservissement en trajectoire, est utilisée pour définir une entrée de la fonction d'assistance à la manoeuvre (fonction d'assistance à la manoeuvre qui est ici réalisée par une fonction d'asservissement en couple conducteur, c'est-à-dire par une boucle d'asservissement utilisant comme variable régulée le couple conducteur), fonction d'assistance à la manoeuvre qui commande à son tour le moteur d'assistance en définissant (seule), la consigne (unique) de couple moteur applicable audit moteur d'assistance.

En d'autres termes, l'invention propose une nouvelle architecture dans laquelle les boucles fermées respectivement d'asservissement en trajectoire et d'asservissement en couple conducteur sont imbriquées en série, de telle sorte que la sortie de la fonction de pilotage automatique (i.e. d'asservissement en trajectoire) n'interfère pas directement, sous forme d'une consigne de couple moteur, avec la sortie de la fonction d'assistance à la manoeuvre (ici d'asservissement en couple conducteur), mais est au contraire utilisée comme entrée, et plus particulièrement comme consigne, de ladite fonction d'assistance à la manoeuvre, ici sous forme d'une consigne de couple conducteur.

Cette architecture en série permet donc d'organiser et de hiérarchiser efficacement les fonctions de pilotage automatique (fonction d'asservissement en trajectoire) et d'assistance à la manoeuvre (fonction d'asservissement en couple conducteur), en l'espèce en mettant en quelque sorte la fonction d'assistance à la manoeuvre (fonction d'asservissement en couple conducteur) "au service" de la fonction de pilotage automatique (fonction d'asservissement en trajectoire), de telle sorte qu'au lieu de s'opposer l'une à l'autre, en se faisant concurrence ou en se contrariant, lesdites fonctions collaborent, en parfaite complémentarité.

Avantageusement, l'architecture proposée permet de maintenir actives et opérationnelles simultanément, et de faire fonctionner ensemble, les différentes fonctions, ici d'asservissement en trajectoire et d'asservissement en couple conducteur, sans que ces fonctions n'entrent en conflit, et sans qu'il soit nécessaire d'inhiber sélectivement l'une ou l'autre desdites fonctions, ni de gérer des transitions instables entre différents régimes de fonctionnement associés à ces fonctions respectives.

La stabilité et les performances du procédé de gestion de la direction s'en trouvent ainsi considérablement accrues.

En outre, une telle architecture est particulièrement polyvalente, en ceci notamment qu'elle permet intrinsèquement, sans élément additionnel, de gérer naturellement aussi bien les situations de volant lâché que les situations de volant tenu, et plus particulièrement de gérer en douceur les situations dans lesquelles le conducteur reprend le volant en main alors que la fonction de pilotage automatique est active, sans provoquer pour autant la désactivation de ladite fonction de pilotage automatique.

En effet, en situation de volant lâché, la fonction de pilotage automatique (fonction d'asservissement en trajectoire), par exemple la fonction de suivi de voie de circulation, pourra agir librement, sans rencontrer de résistance manuelle à l'action du volant, et ainsi piloter le moteur d'assistance, ici indirectement, à travers la fonction d'asservissement en couple conducteur, sans être contrariée par une action du conducteur.

A l'inverse, en situation de volant tenu (ou plus particulièrement de reprise du volant en mains), il peut naître un conflit (une opposition d'objectifs de manoeuvre, et donc une opposition de forces) entre d'une part une manoeuvre manuelle voulue par le conducteur, et d'autre part la manoeuvre automatique voulue par l'asservissement en trajectoire, ce qui se traduit par une élévation du couple conducteur effectif, tel qu'il est effectivement ressenti par le conducteur.

Cependant, on comprendra que, puisque ledit couple conducteur effectif, tel qu'il est effectivement ressenti par le conducteur lorsque celui-ci tient le volant, est dûment pris en considération dans l'élaboration de la consigne de couple moteur appliquée au moteur d'assistance, alors les évolutions, induites par le moteur d'assistance, dudit couple conducteur, seront progressives et ne créeront pas, notamment, de pic de couple susceptible d'entraîner, voire de tordre, le bras ou le poignet du conducteur.

En effet, lorsque le conducteur reprend le volant en main et cherche à retenir ou à manoeuvrer ledit volant à l'encontre du pilotage automatique, tandis que ledit pilotage automatique tend à faire tourner automatiquement ce même volant pour adapter la trajectoire du véhicule à une trajectoire de référence, la retenue manuelle du volant tend à créer une dérive (un éloignement) de la position effective de la direction par rapport à la consigne de position, et donc tend à augmenter l'écart de position (l'écart de trajectoire) en entrée de l'asservissement de trajectoire.

Pour corriger cette tendance, la boucle d'asservissement en trajectoire réagira en augmentant la consigne de couple conducteur qu'elle transmet en entrée de l'asservissement en couple conducteur.

Une telle augmentation de la consigne de couple conducteur vise en effet *in fine* à augmenter (indirectement, *via* la boucle d'asservissement en couple conducteur qui pilote le moteur d'assistance) la consigne de couple moteur applicable au moteur d'assistance, et ainsi à augmenter l'effort de rappel délivré par ledit moteur d'assistance de manière à pouvoir amener le volant (et plus globalement la direction) vers la position qui correspond à la trajectoire de référence (c'est-à-dire vers la consigne de position).

Toutefois, la retenue du volant par le conducteur à l'encontre du mouvement de pilotage automatique tend aussi, simultanément, à augmenter le couple conducteur effectif, puisque ledit couple conducteur effectif reflète le couple de torsion résultant (mesuré) que subit le volant de conduite lorsque ledit volant de conduite est soumis à l'action combinée, et ici opposée, de l'effort manuel exercé par le conducteur et de l'effort motorisé induit par l'asservissement en trajectoire.

Cette augmentation du couple conducteur effectif se répercutera naturellement en entrée de l'asservissement en couple conducteur.

En d'autres termes, une retenue manuelle du volant de conduite à l'encontre du pilotage automatique induira simultanément d'une part une augmentation de la consigne de couple conducteur (déterminée par l'asservissement en trajectoire) et d'autre part une augmentation du couple conducteur effectif (même si ladite augmentation de couple conducteur effectif n'est pas nécessairement identique à l'augmentation de la consigne de couple conducteur), si bien que, finalement, l'écart de couple conducteur, tel qu'il est considéré par l'asservissement en couple conducteur, ne subira aucune variation brusque (c'est-à-dire aucune variation de forte amplitude dans un laps de temps réduit).

Par conséquent, en cas de transition d'un état « volant lâché » à un état « volant tenu », la consigne de couple moteur, qui est déterminée par l'asservissement en couple conducteur en fonction dudit écart de couple conducteur, évoluera elle-même progressivement, ce qui permettra d'éviter toute apparition d'un pic de couple moteur (c'est-à-dire d'éviter une élévation de forte amplitude et quasi-instantanée dudit couple moteur), et donc d'éviter l'apparition d'un pic du couple conducteur ressenti (subi) par le conducteur.

On notera à ce titre que si l'adaptation de la consigne de couple moteur au fil du temps est « progressive » en ce sens qu'elle permet de conserver une évolution progressive, sans chocs violents, de l'intensité du couple conducteur effectif, tel qu'il est ressenti par le conducteur, il n'en demeure pas moins que les ajustements élémentaires de la consigne de couple conducteur et de la consigne de couple moteur peuvent s'opérer très rapidement (c'est-à-dire à intervalles de temps très rapprochés), typiquement selon une période de rafraîchissement de l'ordre de quelques millisecondes qui caractérise le temps de réponse du système d'asservissement conforme à l'invention.

En d'autres termes, bien que le procédé proposé reste progressif dans ses effets tels qu'ils sont ressentis par le conducteur, il n'en demeure pas moins particulièrement réactif, au bénéfice du confort et de la sécurité du conducteur.

Dans l'exemple ci-dessus, la reprise en main à l'encontre du pilotage automatique pourra ainsi se traduire par une augmentation douce du couple conducteur ressenti par le conducteur à travers le volant, ce qui permettra au pilotage automatique de transmettre audit conducteur une information tactile qui indique audit conducteur dans quelle direction il devrait tourner le volant pour se placer dans la trajectoire de référence, sans toutefois que cette incitation à manoeuvrer le volant ne dégénère en une manoeuvre automatique violente, qui entraînerait en force le poignet ou le bras du conducteur.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon un schéma-bloc, le principe de mise en oeuvre du procédé selon l'invention.
La figure 2 illustre un exemple de loi utilisée pour l'asservissement en trajectoire.

La présente invention concerne un procédé de gestion d'une direction assistée 1.

De façon connue en soi, ladite direction assistée 1, et plus particulièrement le mécanisme 2 de ladite direction assistée, comprend au moins un volant de conduite 3, permettant au conducteur d'agir sur la direction pour en commander manuellement la manoeuvre de braquage.

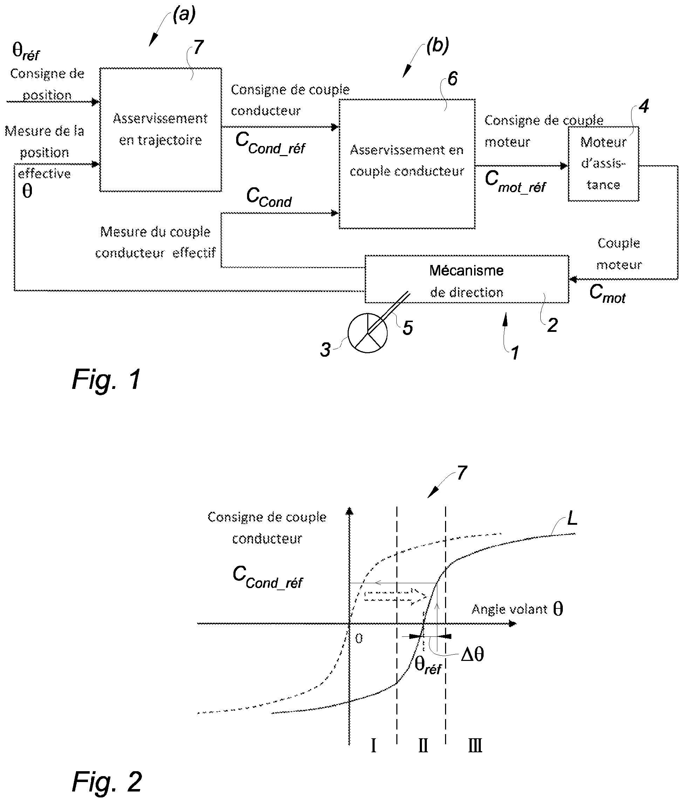

La direction assistée 1 comprend également au moins un moteur d'assistance 4, destiné à fournir un effort, et plus particulièrement un couple, d'assistance à la manoeuvre de la direction (noté « couple moteur » Cₘₒₜ sur la figure 1).

On peut indifféremment envisager tout type de moteur d'assistance 4, et plus particulièrement tout type de moteur d'assistance à double sens de fonctionnement, et notamment un moteur d'assistance rotatif ou un moteur d'assistance linéaire.

Par ailleurs, ledit moteur d'assistance 4 peut être par exemple hydraulique, ou bien, de préférence, électrique (l'utilisation d'un moteur électrique facilitant notamment l'implantation et la mise en oeuvre dudit moteur, ainsi que la génération et la gestion des signaux utiles).

De façon particulièrement préférentielle, le moteur d'assistance 4 sera un moteur électrique rotatif, par exemple de type « brushless ».

Par ailleurs, la direction assistée comprend de préférence, de manière connue en soi, une colonne de direction 5, entraînée par le volant de conduite 3 et qui engrène, au moyen d'un pignon, sur une crémaillère de direction (non représentée) montée coulissante dans un carter de direction solidaire du châssis du véhicule.

Les extrémités de la crémaillère de direction sont de préférence reliées chacune, par l'intermédiaire d'une biellette de direction, à un porte-fusée orientable en lacet, sur lequel est monté une roue directrice (et préférentiellement motrice) du véhicule, de telle manière que le déplacement de la crémaillère en translation dans le carter provoque une modification de l'angle de braquage (i.e. de l'orientation en lacet) desdites roues directrices.

Le moteur d'assistance 4 peut venir en prise sur la colonne de direction 5, par exemple par l'intermédiaire d'un réducteur à roue tangente et vis sans fin, ou bien encore venir en prise directement sur la crémaillère de direction, par un mécanisme d'entraînement de type vis à billes ou bien *via* un pignon moteur distinct du pignon de la colonne de direction (pour former alors un mécanisme de direction dit « à double pignon »).

Selon l'invention, le procédé comprend une étape (b) d'asservissement en couple conducteur, ici réalisée au moyen d'un module d'asservissement en couple conducteur 6, au cours de laquelle on mesure le couple conducteur effectif C_{cond} qui est réellement exercé, à l'instant considéré, par le conducteur sur le volant de conduite 3, puis l'on compare ledit couple conducteur effectif C_{cond} à une consigne de couple conducteur C_{cond_réf} prédéterminée afin d'évaluer un écart de couple conducteur ΔC_{cond} qui correspond à la différence entre le couple conducteur effectif et ladite consigne de couple conducteur : ΔC_{cond} = C_{cond} - C_{cond_réf} (ou, selon une convention de signe opposée mais strictement équivalente dans sa finalité, un écart de couple conducteur ΔC_{cond} qui correspond à la différence entre la consigne de couple conducteur et le couple conducteur effectif : ΔC_{cond} = C_{cond_réf} - C_{cond}), puis l'on détermine, à partir de cet écart de couple conducteur ΔC_{cond}, une consigne de couple moteur C_{mot_réf} destinée à être appliquée au moteur d'assistance 4 en vue de réduire (et idéalement d'annuler) ledit écart de couple conducteur.

En d'autres termes, l'étape (b) d'asservissement en couple conducteur correspond à une commande en boucle fermée, de type suiveuse, qui utilise comme variable de régulation le couple conducteur appliqué, et donc ressenti, par le conducteur au niveau du volant de conduite 3, et qui adapte les actions exercées par le moteur d'assistance 4 sur le mécanisme de direction 2 (c'est-à-dire, en l'espèce, qui adapte le couple moteur Cₘₒₜ) de sorte à faire converger, par l'effet desdites actions du moteur d'assistance 4 sur le mécanisme de direction 2, le couple conducteur effectif C_{cond} vers la consigne de couple conducteur C_{cond_réf}.

Ainsi, la détermination de la consigne de couple moteur C_{mot_réf} appliquée au moteur d'assistance 4 permettra de contrôler l'effort d'assistance (couple moteur) Cₘₒₜ de manière à faire tendre le couple que le conducteur ressent effectivement, par perception tactile lorsqu'il tient le volant de conduite 3, vers la consigne de couple conducteur C_{cond_réf}, consigne de couple conducteur qui correspondra typiquement au ressenti qui serait normalement souhaité et attendu par un conducteur dans la situation dynamique dans laquelle le véhicule se trouve à l'instant considéré.

Avantageusement, un asservissement en couple conducteur procure une assistance de direction qui assure une cohérence entre le comportement dynamique instantané du véhicule (vitesse, accélération latérale, vitesse de lacet, etc.), les réactions de la route sur le train roulant (effort exercé sur la crémaillère, angle de dérive, etc.) et le retour d'effort (couple conducteur effectif C_{cond}) perçu par le conducteur à travers le volant 3.

Avantageusement, un tel asservissement en couple conducteur permet notamment de découpler (de traiter séparément, de façon indépendante) d'une part le "besoin" (ce que doit ressentir le conducteur), c'est-à-dire la génération de la consigne de couple conducteur C_{cond_réf}, et d'autre part la "réalisation" effective, c'est-à-dire la mise en oeuvre du contrôle en boucle fermée du couple conducteur.

Avantageusement, un asservissement par le couple conducteur permet parfaitement de réaliser une assistance "conventionnelle" de direction, destinée typiquement à venir en renfort, grâce au couple d'assistance Cₘₒₜ délivré par le moteur d'assistance 4, de l'action exercée par le conducteur sur le volant de conduite, et ce afin de faciliter la manoeuvre du mécanisme de direction 2 dans le sens voulu par le conducteur (le moteur d'assistance 4 coopérant alors avec le conducteur pour oeuvrer dans le même sens de manoeuvre).

On comprendra en effet que lorsque le conducteur cherche à tourner le volant 3 pour modifier l'angle de braquage, à l'encontre de la résistance opposée par le mécanisme de direction 2 (cette résistance provenant aussi bien des efforts internes qui s'exercent au sein du mécanisme 2, que des efforts liés au roulage et à la dynamique externe du véhicule), le couple conducteur effectif C_{cond} tend à augmenter, ce qui conduit à modifier la consigne de couple moteur C_{mot_réf} en conséquence.

Plus particulièrement, si l'augmentation du couple conducteur effectif C_{cond}, provoquée par la rotation volontaire du volant par le conducteur, induit une augmentation de l'écart de couple conducteur ΔC_{cond}, la consigne de couple moteur C_{mot_réf} sera également augmentée, afin d'accroître l'intensité de l'effort d'assistance Cₘₒₜ délivré par le moteur d'assistance 4 (en effet, si le couple conducteur effectivement ressenti C_{cond} est trop grand, cela signifie que l'effort d'assistance Cₘₒₜ procuré par le moteur 4 est trop faible).

Cet accroissement de l'effort d'assistance Cₘₒₜ permettra alors de manoeuvrer plus facilement le mécanisme de direction 2 en direction de la position-cible voulue par le conducteur (telle que cette dernière est définie par la position du volant de conduite).

En forçant ainsi la position du mécanisme de direction à se rapprocher de ladite position-cible, par l'augmentation de l'effort d'assistance Cₘₒₜ, on provoquera le relâchement progressif de la torsion que subit le volant de conduite 3, c'est-à-dire que l'on réduira le couple conducteur ressenti C_{cond}, et donc *in fine* l'écart de couple conducteur ΔC_{cond}.

A titre d'exemple, on pourra utiliser un asservissement en couple conducteur de type proportionnel-intégral, dans lequel l'action proportionnelle augmente quand l'écart de couple conducteur ΔC_{cond} croît et diminue quand ledit écart de couple conducteur décroît, et dans lequel l'action intégrale permet d'augmenter l'effort d'assistance (couple moteur) Cₘₒₜ tant que l'écart de couple conducteur ΔC_{cond} est positif (c'est-à-dire, selon la convention de signe retenue plus haut, tant que le couple conducteur effectif C_{cond} excède la consigne de couple conducteur C_{cond_réf}, si bien que ΔC_{cond} = C_{cond} - C_{cond_réf} est supérieur à zéro) et de diminuer ledit effort d'assistance Cₘₒₜ tant que l'écart de couple conducteur ΔC_{cond} est négatif (c'est-à-dire tant que le couple conducteur effectif reste inférieur à la consigne de couple conducteur, selon cette même convention de signe).

Bien entendu, si la convention de signe utilisée pour calculer l'écart de couple conducteur était inversée, c'est-à-dire si l'on avait ΔC_{cond} = C_{cond_réf} - C_{cond}, il suffirait simplement d'inverser les signes des gains du contrôleur proportionnel-intégral en conséquence pour parvenir au même résultat en matière de régulation.

Dans l'exemple susmentionné, qui correspond à un écart de couple conducteur ΔC_{cond} positif (le conducteur tire sur le volant de telle manière que le couple conducteur ressenti excède la consigne de couple conducteur) et décroissant (l'effort d'assistance Cₘₒₜ augmente pour permettre au mécanisme de direction de suivre le coup de volant donné par le conducteur, et ainsi permettre au couple conducteur ressenti de diminuer pour se rapprocher de la consigne de couple conducteur), l'action proportionnelle va diminuer au fur et à mesure que ledit écart de couple conducteur ΔC_{cond} décroît (en valeur absolue), tandis que l'action intégrale continue quant à elle à augmenter (mais en ralentissant progressivement sa vitesse de croissance au fur et à mesure que le couple conducteur ressenti se rapproche de la consigne de couple conducteur), si bien que, globalement, lorsque l'écart ΔC_{cond} diminue, l'effort d'assistance (couple moteur) Cₘₒₜ augmente en douceur (selon une progression de moins en moins abrupte), jusqu'à atteindre, et se stabiliser à, une valeur fixe (qui permet d'équilibrer les efforts exercés sur le mécanisme de direction dans la position de volant souhaitée) quand l'écart ΔC_{cond} devient nul.

Le couple conducteur effectif C_{cond}, que l'on pourra aussi désigner par l'expression « couple volant », pourra bien entendu être mesuré par tout capteur de couple approprié, tel qu'un capteur magnétique de couple mesurant les déformations élastiques d'une barre de torsion placée entre le volant de conduite 3 et la colonne de direction 5.

Selon l'invention, la consigne de couple conducteur C_{cond_réf} qui est utilisée lors de l'étape (b) d'asservissement en couple conducteur est générée lors d'une étape (a) d'asservissement en trajectoire, ici réalisée au moyen d'un module d'asservissement en trajectoire 7, au cours de laquelle on mesure la valeur effective d'au moins un paramètre dit « paramètre de trajectoire » θ, qui est représentatif de la trajectoire effective du véhicule, puis l'on compare ce paramètre de trajectoire à une consigne de trajectoire θ_{réf}, qui est prédéterminée en fonction d'une trajectoire de référence que l'on souhaite automatiquement faire suivre au véhicule, afin d'évaluer un écart de trajectoire Δθ qui correspond à la différence entre ladite consigne de trajectoire θ_{réf} et la valeur effective du paramètre de trajectoire θ, puis l'on détermine, à partir de cet écart de trajectoire Δθ, une consigne de couple conducteur C_{cond_réf} estinée à réduire ledit écart de trajectoire, c'est-à-dire destinée à faire converger la trajectoire effective du véhicule vers la trajectoire de référence, de manière à ce que le véhicule rejoigne ladite trajectoire de référence et/ou se maintienne sensiblement sur ladite trajectoire de référence.

En d'autres termes, l'étape (a) d'asservissement en trajectoire correspond à une commande en boucle fermée, de type suiveuse, qui utilise comme variable de régulation un « paramètre de trajectoire », c'est-à-dire une valeur représentative de la trajectoire suivie par le véhicule (à l'instant considéré), et qui cherche à adapter l'action du moteur d'assistance 4 sur le mécanisme de direction 2 (en l'espèce, à adapter indirectement, via la boucle d'asservissement en couple conducteur, le couple moteur Cₘₒₜ) de sorte à faire converger la valeur effective du paramètre de trajectoire θ vers la consigne de trajectoire θ_{réf} que l'on fixe en entrée de ladite boucle, et donc, *in fine*, de sorte à faire converger la trajectoire effective du véhicule vers la trajectoire de référence.

On pourra utiliser comme paramètre de trajectoire θ, c'est-à-dire comme grandeur asservie par la fonction d'asservissement en trajectoire, tout paramètre approprié.

En particulier, on pourra utiliser, comme paramètre de trajectoire, la position (et/ou l'orientation) du véhicule dans un référentiel externe au véhicule, ou bien la vitesse de lacet du véhicule, ou bien encore, selon une possibilité particulièrement préférentielle de mise en oeuvre, la position effective θ de la direction assistée (c'est-à-dire l'angle de braquage), dans un référentiel interne au véhicule.

La nature de la consigne de trajectoire sera bien entendu adaptée à la nature du paramètre de trajectoire retenu.

Ainsi, la consigne de trajectoire pourra prendre la forme d'une consigne de position du véhicule, respectivement d'une consigne d'orientation du véhicule, dans un référentiel externe au véhicule lorsque le paramètre de trajectoire est la position, respectivement l'orientation, du véhicule, ou bien encore d'une consigne de vitesse de lacet lorsque ledit paramètre de trajectoire est la vitesse de lacet du véhicule, ou bien encore d'une consigne de position de la direction assistée (consigne d'angle de braquage) θ_{réf} lorsque le paramètre utilisé est la position θ (l'angle de braquage) de la direction assistée (dans un référentiel interne au véhicule).

Dans ce qui suit, par commodité, on fera plus préférentiellement référence à un asservissement en trajectoire qui utilise la position de la direction assistée (l'angle de braquage) θ comme paramètre de trajectoire, étant entendu que l'invention reste applicable, *mutatis mutandis,* à tout autre asservissement en trajectoire.

Par commodité, on pourra donc assimiler les notions de paramètre de trajectoire, de consigne de trajectoire, et d'écart de trajectoire, ainsi que les références correspondantes, aux notions et aux références de position (angle de braquage) θ, de consigne de position θ_{réf}, et d'écart de position Δθ.

Ainsi, de préférence, la consigne de couple conducteur C_{cond_réf} qui est utilisée lors de l'étape (b) d'asservissement en couple conducteur peut être générée lors d'une étape (a) d'asservissement en trajectoire au cours de laquelle on mesure la position effective θ de la direction assistée, puis l'on compare cette position effective θ à une consigne de position θ_{réf}, qui est prédéterminée en fonction d'une trajectoire de référence que l'on souhaite automatiquement faire suivre au véhicule, afin d'évaluer un écart de position Δθ qui correspond à la différence entre ladite consigne de position et la position effective de la direction : Δθ = θ_{réf} - θ (ou inversement, à la différence entre la position effective de la direction et la consigne de position : Δθ = θ - θ_{réf}, selon la convention de signe qui pourra, ici encore, être librement choisie), puis l'on détermine, à partir de cet écart de position Δθ, une consigne de couple conducteur C_{cond_réf} destinée à réduire ledit écart de position Δθ ; cette consigne de couple conducteur C_{cond_réf} est celle qui est ensuite appliquée en entrée de l'asservissement en couple conducteur, comme indiqué plus haut.

Selon cette variante préférentielle de mise en oeuvre, l'étape (a) d'asservissement en trajectoire (dite aussi « de contrôle en position ») correspond à une commande en boucle fermée, de type suiveuse, qui utilise comme variable de régulation la position de la direction assistée, c'est-à-dire une valeur représentative de la configuration de braquage de la direction assistée, et qui cherche à adapter l'action du moteur d'assistance 4 sur le mécanisme de direction 2 (en l'espèce, à adapter indirectement, via la boucle d'asservissement en couple conducteur, le couple moteur Cₘₒₜ) de sorte à faire converger la position effective θ de la direction assistée vers la consigne de position θ_{réf} que l'on fixe en entrée de ladite boucle.

On notera que, avantageusement, et tel que cela est bien visible sur la figure 1, l'adaptation de l'action du moteur d'assistance 4 par la boucle d'asservissement en trajectoire n'est pas directe, mais passe par l'intermédiaire de la boucle d'assistance "normale" que constitue la boucle d'asservissement en couple conducteur.

En d'autres termes, la boucle d'asservissement en couple conducteur (b) est ici imbriquée, sous forme d'un régulateur esclave, au sein de la boucle d'asservissement en trajectoire (a), qui forme le régulateur maître.

Ainsi, la sortie du module d'asservissement en trajectoire 7 est connectée à l'entrée du module d'asservissement en couple conducteur 6, et conçue pour émettre non pas directement une consigne de couple moteur qui interférerait avec celle issue du module d'asservissement en couple conducteur 6, mais bel et bien une consigne de couple conducteur C_{cond_réf}, qui va être utilisée (en entrée) par ledit module d'asservissement en couple conducteur 6 pour déterminer (en sortie dudit module 6) une (unique) consigne de couple moteur C_{mot_réf}, laquelle sera appliquée ensuite (directement) au moteur d'assistance 4.

On remarquera que l'architecture proposée permet avantageusement d'isoler d'une part la façon dont on souhaite inciter le conducteur à suivre une certaine trajectoire de référence (et notamment à suivre sa voie de circulation), ici en générant (par le module d'asservissement en trajectoire 7) un "besoin" exprimé sous forme d'une consigne de couple conducteur C_{cond_réf} qui correspond à ce que doit ressentir le conducteur, et d'autre part le moyen de "réalisation" qui permet de satisfaire ce besoin, c'est-à-dire qui permet de parvenir concrètement à ce que le conducteur suive la trajectoire de référence, ici grâce à l'asservissement en couple conducteur procuré par le module 6.

En outre, tel que cela a été indiqué plus haut, cette architecture propre à l'invention permet de concilier efficacement l'asservissement en trajectoire, qui dépend d'un pilotage automatique actif, avec l'asservissement en couple conducteur, correspondant à une assistance "conventionnelle" qui dépend d'un pilotage manuel, en faisant coexister ces fonctions distinctes sans qu'il soit nécessaire d'inhiber sélectivement l'une ou l'autre desdites fonctions ou de dégrader les performances de l'une ou l'autre desdites fonctions.

La position effective (instantanée) θ de la direction assistée pourra être obtenue par toute mesure au moyen d'un capteur de position approprié, par exemple par une mesure de la position linéaire de la crémaillère, ou bien encore, de préférence, par une mesure de la position angulaire du volant de conduite 3 (notée aussi « angle volant », sur la figure 2), ou bien, de manière équivalente, en connaissant le rapport de réduction mécanique de la chaîne cinématique qui relie le moteur d'assistance 4 audit volant de conduite 3, par une mesure de la position angulaire de l'arbre du moteur d'assistance 4.

Le cas échéant, la position angulaire de l'arbre du moteur d'assistance 4 pourra être déterminée au moyen d'un capteur de type « resolver », de préférence intégré au moteur d'assistance.

Bien entendu, plus globalement, le ou les paramètres de trajectoire θ utilisés pour caractériser la trajectoire effective du véhicule pourront êtres mesurés par tout moyen approprié, et le cas échéant déterminés par calcul à partir d'une ou plusieurs autres données mesurées, et elles-mêmes représentatives de la trajectoire effective du véhicule (et notamment représentatives de la position, de l'orientation, ou du comportement dynamique du véhicule à l'instant considéré).

Ainsi, la vitesse de lacet pourra être mesurée par exemple au moyen d'un capteur inertiel.

De même, la position et l'orientation du véhicule par rapport à la trajectoire de référence (dans un référentiel externe au véhicule) pourront être mesurées à partir de caméras ou de capteurs de distance (notamment optiques ou à ultrasons) capable de mesurer la distance du véhicule par rapport à des points de repère de son environnement, tels qu'un marquage au sol délimitant la voie de circulation, ou bien encore au moyen d'un système de géo-localisation (GPS).

La consigne de position θ_{réf} (et plus globalement la consigne de trajectoire) appliquée à un instant considéré correspondra à une position-cible, calculée par le système de direction, dans laquelle doit se placer le mécanisme de direction 2 pour que le véhicule puisse, dans la situation de vie dans laquelle il se trouve, adopter un angle de braquage des roues directrices qui permette au véhicule de suivre une trajectoire réelle qui se rapproche le plus possible (dans une marge de tolérance prédéfinie), et idéalement coïncide, avec la trajectoire de référence prédéterminée.

En d'autres termes, la fonction de l'asservissement en trajectoire sera d'assurer un pilotage automatique du véhicule permettant de garder la trajectoire réelle du véhicule au voisinage de la trajectoire (idéale) de référence, en opérant en temps réel les corrections de trajectoire (et donc les ajustements de consigne de position) nécessaires.

En pratique, la consigne de position θ_{réf} (et plus globalement la consigne de trajectoire) sera donc variable dans le temps, en signe (gauche/droite) comme en intensité (amplitude de l'angle de braquage), selon la trajectoire de référence visée et les corrections opérées.

La trajectoire de référence sera avantageusement construite automatiquement à partir, entre autres, de données relatives à des paramètres extérieurs liés à l'environnement du véhicule, tels que la distance séparant une partie du véhicule d'un obstacle externe (par exemple un autre véhicule en stationnement) ou bien la position relative du véhicule par rapport à un repère extérieur, par exemple par rapport à une ligne de séparation de voies de circulation.

Ces données pourront être acquises, sensiblement en temps réel, par toute mesure appropriée, réalisée par exemple au moyen de capteurs sans contact (caméras, capteurs optiques, capteurs ultrasonores, etc.).

Les informations fournies par ces données permettront de déterminer la situation du véhicule dans son environnement (position, orientation, vitesse, etc.) à l'instant considéré, et ainsi de proposer, dans un référentiel externe au véhicule, une trajectoire (ou des corrections de trajectoire) adaptées à la fois audit environnement, à la dynamique du véhicule (déterminée notamment en fonction de la vitesse longitudinale, des efforts exercés sur la crémaillère et/ou de paramètres de dynamique latérale tels que la vitesse de lacet ou l'accélération latérale), ainsi que, bien entendu, à l'opération de pilotage automatique visée.

De préférence, au cours de l'étape (a) d'asservissement en trajectoire, on pourra notamment utiliser, pour déterminer la consigne de trajectoire θ_{réf}, et plus préférentiellement pour déterminer la consigne de position θ_{réf}, une fonction de pilotage automatique de manoeuvre de stationnement (généralement connue sous le nom de « park assist »), notamment de manoeuvre de stationnement en marche arrière, et plus particulièrement une fonction de pilotage automatique pour la réalisation de créneaux, ou bien encore une fonction de pilotage automatique de suivi d'une voie de circulation (généralement connue sous le nom de « lane keeping »).

De façon bien connue en soi, la surveillance de la voie de circulation, et donc la définition (construction) de la trajectoire de référence (ou des corrections de trajectoire) correspondant au tracé de ladite voie de circulation, que ledit tracé soit du reste rectiligne ou incurvé, pourra être réalisée au moyen de caméras aptes à détecter le marquage de limite de voie de circulation et à mesurer la position du véhicule par rapport audit marquage.

De préférence, l'étape (a) d'asservissement en trajectoire comprend une sous-étape (a1) de saturation de sortie, au cours de laquelle on compare la consigne de couple conducteur C_{cond_réf} à un seuil maximal admissible prédéterminé, dit « seuil de saturation de couple conducteur » C_{cond_MAX}, et on limite la consigne de couple conducteur à la valeur dudit seuil de saturation de couple conducteur C_{cond_MAX} si ladite consigne de couple conducteur dépasse ledit seuil de saturation.

En d'autres termes, on s'assure que l'amplitude de la consigne de couple conducteur C_{cond_réf} qui est effectivement appliquée en entrée du module d'asservissement en couple conducteur 6 n'excède en aucun cas le seuil de saturation C_{cond_MAX}, de manière à éviter de provoquer une action trop forte du volant de conduite 3 sur le bras du conducteur.

Avantageusement, ce bornage (plafonnement) de la consigne de couple conducteur garantit un fonctionnement sûr du pilotage automatique, qui, bien que présent, ne risque pas de mettre le conducteur en danger, ou de lui occasionner une blessure par un entraînement irrésistible du bras ou de la main.

Avantageusement, la saturation prévue par l'invention permet donc de conserver le bénéfice de l'asservissement en trajectoire, en autorisant l'application d'une consigne de couple conducteur non nulle, perceptible par le conducteur lorsque ce dernier tient le volant en main, et qui permet donc de faire ressentir activement au conducteur un effet de rappel du volant qui tend à guider la manoeuvre du volant vers la position de la direction décidée par le contrôle de trajectoire (c'est-à-dire vers la position de la direction qui doit permettre de suivre ou de rejoindre la trajectoire de référence), tout en évitant néanmoins toute action trop forte qui pourrait forcer le déplacement du volant de conduite contre la volonté du conducteur.

En d'autre termes, la saturation permet à la fonction d'asservissement en trajectoire de signaler tactilement au conducteur une dérive par rapport à la trajectoire de référence, et de lui faire ressentir dans quelle direction, et plus particulièrement vers quelle position, il conviendrait de manoeuvrer le volant de conduite pour revenir à cette trajectoire de référence, sans pour autant que cet asservissement en trajectoire n'empêche ni ne supplante une manoeuvre manuelle (divergente) du volant de conduite, librement décidée par le conducteur et distincte de la manoeuvre automatique voulue par l'asservissement en trajectoire.

Ainsi, le fonctionnement du procédé est à la fois efficace et sans danger pour le conducteur, que ce dernier tienne le volant ou bien qu'il ait lâché ledit volant.

De façon particulièrement préférentielle, le seuil de saturation de couple conducteur C_{cond_MAX} est compris entre 1 N.m et 4 N.m, par exemple entre 2 N.m et 3 N.m.

Ces valeurs s'entendent du couple tel qu'il est ressenti par le conducteur, au niveau du volant 3, lorsqu'il tient ledit volant en main. Elles correspondent avantageusement, en pratique, à une limite d'effort (de couple) qui est acceptable pour la majeure partie de la population, c'est-à-dire qui reste nettement inférieure à la capacité musculaire d'un conducteur "moyen", de telle sorte que le conducteur puisse ressentir l'incitation tactile (le cas échéant bornée par saturation) que lui transmet l'asservissement en trajectoire, tout en conservant la liberté, lorsque cela est nécessaire, de manoeuvrer manuellement le volant "en force" à l'encontre dudit asservissement en trajectoire, sans risque de perte de contrôle du volant et sans fatigue excessive.

Selon une possibilité de mise en oeuvre, l'asservissement en trajectoire pourra comporter un régulateur (correcteur) de type PID (proportionnel-intégrale-dérivée) pour déterminer la consigne de couple conducteur à partir de l'écart de position Δθ.

A titre d'exemple très simple, un régulateur de type proportionnel pourrait associer à l'écart de position Δθ une consigne de couple conducteur C_{cond_réf} obtenue simplement en multipliant ledit écart de position par un coefficient k assimilable à une raideur (de type ressort) : C_{cond_réf} = k * Δθ

Un régulateur de type intégral permet, de façon connue en soi, de réduire l'erreur statique de l'asservissement.

De façon préférentielle, lors de l'étape (a) d'asservissement en trajectoire, on utilise, pour déterminer la consigne de couple conducteur C_{cond_réf} à partir de l'écart de trajectoire Δθ, et plus préférentiellement à partir de l'écart de position Δθ, une loi L de détermination de consigne de couple conducteur qui prend la forme d'une fonction centrée sur la consigne de trajectoire θ_{réf}, et plus préférentiellement centrée sur la consigne de position θ_{réf}, et qui associe à toute valeur effective du paramètre de trajectoire θ, et plus préférentiellement à toute valeur de position effective θ de la direction, et encore plus préférentiellement à toute valeur d'angle volant représentative de la position angulaire du volant de conduite 3, une consigne de couple conducteur C_{cond_réf} correspondante, tel que cela est illustré sur la figure 2.

Avantageusement, le centrage de la loi L de détermination de couple conducteur sur la consigne de trajectoire (consigne de position) θ_{réf} correspondant à trajectoire de référence, c'est-à-dire, graphiquement, le passage de la fonction représentative de ladite loi L par le point d'abscisse θ_{réf} et d'ordonnée C_{cond_réf} = 0, permet d'assimiler directement l'écart de trajectoire (l'écart de position) Δθ à la valeur effective du paramètre de trajectoire (valeur de la position effective) θ.

Ladite loi L peut ainsi associer directement à tout écart de position (écart de trajectoire) Δθ non nul, c'est-à-dire à toute position effective θ qui ne coïncide pas avec la position de référence définie par la consigne de position θ_{réf}, une consigne de couple conducteur C_{cond_réf} non nulle (et, par conséquent, indirectement, une consigne de couple moteur non nulle C_{mot_réf}), qui tend à ramener le mécanisme de direction 2 vers (ou dans) ladite position de référence (définie par la consigne de position).

Avantageusement, tel que cela est illustré par la courbe en pointillés sur la figure 2, la loi L pourra être centrée sur une position de référence (consigne de position) θ_{réf} nulle, qui pourra correspondre au point milieu de la direction, ceci permettant le suivi d'une trajectoire rectiligne.

Toutefois, tel que cela est illustré par la courbe en trait plein sur la figure 2, l'invention autorisera avantageusement le centrage de la loi L sur toute valeur de consigne de position θ_{réf} (et plus globalement sur toute consigne de trajectoire) non nulle, qui sera le cas échéant variable dans le temps et réactualisée périodiquement, sensiblement en temps réel, par le module d'asservissement en trajectoire 7.

L'invention offrira donc la possibilité d'ajuster dynamiquement la loi L, de manière à pouvoir assurer (également) le suivi de trajectoires de référence non rectilignes, par exemple d'aide au stationnement ou encore de suivi d'une voie de circulation en courbe.

Le procédé bénéficiera donc d'une grande polyvalence, permettant de répondre, grâce à une même architecture, à différents besoins en matière de pilotage automatique.

Selon une caractéristique préférentielle qui peut constituer une invention à part entière, et tel que cela est illustré sur la figure 2, la fonction représentative de la loi L de détermination de consigne de couple conducteur est une courbe dite « en S » présentant un domaine central II croissant, centré sur la consigne de trajectoire θ_{réf}, et plus particulièrement centré sur la consigne de position θ_{réf}, et de préférence sensiblement linéaire, qui est encadré par deux domaines asymptotiques I, respectivement III, de pente(s) moindre(s) que celle du domaine central II, voire de pente sensiblement nulle.

Ladite courbe en S, qui comprend ainsi un premier domaine asymptotique I, suivi d'un domaine central II de pente moyenne plus importante que la pente moyenne dudit premier domaine asymptotique I, puis ensuite un second domaine asymptotique III qui suit le domaine central II et qui présente une pente moyenne inférieure à la pente moyenne de ce dernier, sera de préférence symétrique par rapport au point sur lequel elle est centrée, c'est-à-dire par rapport au point dont l'abscisse est égale à la consigne de trajectoire (consigne de position) θ_{réf} (et dont l'ordonnée est nulle).

Ladite courbe en S peut prendre la forme d'une courbe régulière, continûment dérivable, comme cela est illustré sur la figure 2, ou bien encore la forme simplifiée d'une ligne brisée associant (jointivement) un segment de droite à chacun des domaines I, II, III.

Avantageusement, le choix d'une courbe en S permet d'inclure au sein d'une même loi L de détermination de consigne de couple conducteur d'une part la fonction suiveuse de l'asservissement en trajectoire, qui associe à tout écart de trajectoire (écart de position) Δθ non nul une consigne de couple conducteur C_{cond_réf} non nulle (notamment dans le domaine central II, qui agit de préférence selon une loi proportionnelle), et, d'autre part, une fonction de saturation (progressive) qui permet, dans les domaines périphériques asymptotiques I, III, de plafonner l'action de l'asservissement en trajectoire à l'encontre du conducteur, et ce y compris lorsqu'un écart important est créé, par l'action manuelle du conducteur sur le volant de conduite 3, entre la trajectoire effective (position effective) θ et la consigne de trajectoire (consigne de position) θ_{réf} spécifiée par l'asservissement en trajectoire.

Le centrage de la courbe sur la consigne de trajectoire (consigne de position) θ_{réf} procure quant à lui avantageusement les avantages susmentionnés en matière d'automaticité et de polyvalence de la régulation, en permettant de suivre efficacement toute consigne de trajectoire (consigne de position) θ_{réf}, y compris non nulle, librement choisie par l'asservissement en trajectoire.

On notera par ailleurs que la forme de la courbe représentative de la loi L de détermination de la consigne de couple conducteur peut avantageusement être identique (superposable) que l'on considère un asservissement en ligne droite, selon lequel ladite courbe est centrée sur l'origine du repère (θ = 0, C_{cond_réf} = 0), ou bien un asservissement sur une position de référence θ_{réf} non nulle quelconque, par exemple pour un maintien sur une voie de circulation en courbe, selon lequel la courbe est centrée sur ladite position de référence (θ_{réf} ≠ 0), une courbe pouvant se déduire de l'autre par simple translation selon l'axe des abscisses, tel que cela est indiqué par la flèche en trait pointillé sur la figure 2.

Quelle que soit sa forme, la courbe (ou le nuage de points) définissant la loi L de détermination de la consigne de couple conducteur pourra être renseignée sous forme d'une cartographie (« basemap ») stockée en mémoire, cartographie qui sera de préférence paramétrable, c'est-à-dire ajustable, au moins en fonction de la valeur de consigne de trajectoire (consigne de position) θ_{réf}, sur laquelle ladite cartographie est centrée comme indiqué plus haut.

Le cas échéant, d'autres paramètres, tels que par exemple la vitesse du véhicule, pourront influencer la définition de la loi L.

A titre d'exemple, on pourrait ainsi prévoir un niveau de consigne de couple conducteur C_{cond_réf} de plus en plus élevé au fur et à mesure que la vitesse du véhicule augmente (ce qui reviendrait à étirer la courbe de loi L, et donc la cartographie, selon l'axe des ordonnées lorsque la vitesse du véhicule croît, et inversement, à "tasser" ladite courbe lorsque la vitesse du véhicule diminue et/ou se trouve sous un seuil prédéterminé).

Bien entendu, l'invention concerne également en tant que tel un support de données lisible par un ordinateur et contenant des éléments de code de programme informatique assurant l'exécution d'un procédé selon l'une quelconque des caractéristiques décrites dans ce qui précède lorsque ledit support est lu par un ordinateur.

L'invention concerne également un module de gestion de direction assistée comprenant un module d'asservissement en couple conducteur 6, qui reçoit en entrée d'une part une consigne de couple conducteur C_{cond_réf}, et d'autre part une mesure du couple conducteur effectif C_{cond} qui est réellement exercé, à l'instant considéré, par le conducteur sur le volant de conduite 3, qui évalue un écart de couple conducteur ΔC_{cond} qui correspond à la différence entre le couple conducteur effectif C_{cond} et ladite consigne de couple conducteur C_{cond_réf}, et qui fournit en sortie, en fonction dudit écart de couple conducteur, une consigne de couple moteur C_{mot_réf}, destinée à être appliquée au moteur d'assistance 4 en vue de réduire ledit écart de couple conducteur ΔC_{cond}, ledit module de gestion comprenant également un module d'asservissement en trajectoire 7 qui reçoit en entrée une consigne de trajectoire θ_{réf}, qui est prédéterminée en fonction d'une trajectoire de référence que l'on souhaite automatiquement faire suivre au véhicule, ainsi qu'une mesure de la valeur effective θ d'au moins un paramètre dit « paramètre de trajectoire », qui est représentatif de la trajectoire effective du véhicule, puis qui évalue un écart de trajectoire Δθ qui correspond à la différence entre ladite consigne de trajectoire θ_{réf} et la valeur effective du paramètre de trajectoire θ, puis qui fournit en sortie, connectée à l'entrée correspondante du module d'asservissement en couple conducteur 6, une (la) consigne de couple conducteur C_{cond_réf} déterminée à partir de l'écart de trajectoire Δθ et destinée à réduire ledit écart de trajectoire.

Plus préférentiellement, le module d'asservissement en trajectoire 7 reçoit en entrée une consigne de position θ_{réf}, qui est prédéterminée en fonction de la trajectoire de référence que l'on souhaite automatiquement faire suivre au véhicule, ainsi qu'une mesure de la position effective θ de la direction assistée, puis évalue un écart de position Δθ qui correspond à la différence entre ladite consigne de position θ_{réf} et la position effective θ de la direction, puis fournit en sortie, connectée à l'entrée correspondante du module d'asservissement en couple conducteur 6, une (la) consigne de couple conducteur C_{cond_réf} déterminée à partir de l'écart de position Δθ et destinée à réduire ledit écart de position.

Bien entendu, le module d'asservissement en couple conducteur 6 étant placé et utilisé en esclave par rapport au module d'asservissement en trajectoire 7, il est nécessaire que l'asservissement en couple conducteur soit suffisamment rapide pour prendre en considération et exécuter les différentes consignes de couple conducteur C_{cond_réf} qui lui sont transmises par le module d'asservissement en trajectoire 7 au cours du temps.

C'est pourquoi la bande passante de la boucle d'asservissement en couple conducteur sera supérieure (typiquement d'au moins trois fois, et de préférence dix fois) à celle de la boucle d'asservissement en trajectoire, c'est-à-dire que le temps de réponse du module d'asservissement en couple conducteur 6, pour élaborer la consigne de couple moteur C_{mot_réf} et amener le moteur d'assistance 4 à appliquer un couple moteur effectif Cₘₒₜ proche de cette consigne (typiquement à 5% près), sera au moins trois, et de préférence dix fois inférieur au temps qui est nécessaire au module d'asservissement en trajectoire 7 pour rafraîchir la consigne de couple conducteur C_{cond_réf}.

Par ailleurs, chacun des modules 6, 7 susmentionnés pourra être formé par un circuit électronique, une carte électronique, un calculateur (ordinateur), un automate programmable, ou tout autre dispositif équivalent.

Chacun desdits modules 6, 7 pourra présenter une structure de commande physique, liée au câblage de ses composants électroniques, et/ou, de préférence, une structure de commande virtuelle, définie par une programmation informatique.

En outre, l'invention concerne bien entendu également un système de direction assistée comprenant un mécanisme de direction assistée piloté par un module de gestion incluant tout ou partie des modules 6, 7 susmentionnés, et de ce fait capable de mettre en oeuvre le procédé selon l'invention.

L'invention concerne enfin un véhicule automobile, notamment à roues directrices, éventuellement motrices, équipé d'un tel système de direction assistée.

Bien entendu, l'invention n'est par ailleurs nullement limitée aux seules variantes de réalisation décrites dans ce qui précède, l'homme du métier étant notamment à même d'isoler ou de combiner librement entre elles l'une ou l'autre des caractéristiques susmentionnées, ou encore de leur substituer des équivalents.

En particulier, comme cela a été indiqué plus haut, l'invention concerne tout procédé de gestion d'une direction assistée au sein duquel on combine une fonction d'asservissement en couple conducteur (fonction d'assistance) et une fonction d'asservissement en trajectoire (fonction de pilotage automatique) de telle manière que la sortie de la fonction d'asservissement en trajectoire sert de consigne de couple conducteur à la fonction d'asservissement en couple conducteur (c'est-à-dire sert de valeur-cible de couple conducteur, vers laquelle la fonction d'assistance s'efforce ensuite de faire converger la valeur effective du couple conducteur, en générant et en appliquant une commande appropriée au moteur d'assistance).

## Revendications

1. Procédé de gestion d'une direction assistée comprenant au moins un volant de conduite (3) et au moins un moteur d'assistance (4), ledit procédé étant **caractérisé en ce qu'**il comprend une étape (b) d'asservissement en couple conducteur, au cours de laquelle on mesure le couple conducteur effectif (C_{cond}) qui est réellement exercé, à l'instant considéré, par le conducteur sur le volant de conduite (3), puis l'on compare ledit couple conducteur effectif (C_{cond}) à une consigne de couple conducteur (C_{cond_réf}) prédéterminée afin d'évaluer un écart de couple conducteur (ΔC_{cond}) qui correspond à la différence entre le couple conducteur effectif (C_{cond}) et ladite consigne de couple conducteur (C_{cond_réf}), puis l'on détermine, à partir de cet écart de couple conducteur, une consigne de couple moteur (C_{mot_réf}) destinée à être appliquée au moteur d'assistance en vue de réduire ledit écart de couple conducteur, et **en ce que** la consigne de couple conducteur (C_{cond_réf}) qui est utilisée lors de l'étape (b) d'asservissement en couple conducteur est générée lors d'une étape (a) d'asservissement en trajectoire, au cours de laquelle on mesure la valeur effective (θ) d'au moins un paramètre dit « paramètre de trajectoire », qui est représentatif de la trajectoire effective du véhicule, puis l'on compare ce paramètre de trajectoire (θ) à une consigne de trajectoire (θ_{réf}), qui est prédéterminée en fonction d'une trajectoire de référence que l'on souhaite automatiquement faire suivre au véhicule, afin d'évaluer un écart de trajectoire (Δθ) qui correspond à la différence entre ladite consigne de trajectoire (θ_{réf}) et la valeur effective du paramètre de trajectoire (θ), puis l'on détermine, à partir de cet écart de trajectoire (Δθ), une consigne de couple conducteur (C_{cond_réf}) destinée à réduire ledit écart de trajectoire.

2. Procédé selon la revendication 1 **caractérisé en ce que**, au cours de l'étape (a) d'asservissement en trajectoire, on mesure la position effective (θ) de la direction assistée, puis l'on compare cette position effective (θ) à une consigne de position (θ_{réf}), qui est prédéterminée en fonction d'une trajectoire de référence que l'on souhaite automatiquement faire suivre au véhicule, afin d'évaluer un écart de position (Δθ) qui correspond à la différence entre ladite consigne de position et la position effective de la direction, puis l'on détermine, à partir de cet écart de position (Δθ), une consigne de couple conducteur (C_{cond_réf}) destinée à réduire ledit écart de position.

3. Procédé selon la revendication 1 ou 2 **caractérisé en ce que** l'étape (a) d'asservissement en trajectoire comprend une sous-étape (a1) de saturation de sortie, au cours de laquelle on compare la consigne de couple conducteur (C_{cond_réf}) à un seuil maximal admissible prédéterminé (C_{cond_MAX}), dit « seuil de saturation de couple conducteur », et l'on limite la consigne de couple conducteur (C_{cond_réf}) à la valeur dudit seuil de saturation de couple conducteur (C_{cond_MAX}) si ladite consigne de couple conducteur dépasse ledit seuil de saturation.

4. Procédé selon la revendication 3 **caractérisé en ce que** le seuil de saturation de couple conducteur (C_{cond_MAX}) est compris entre 1 N.m et 4 N.m, par exemple entre 2 N.m et 3 N.m.

5. Procédé selon l'une des revendications précédentes **caractérisé en ce que**, lors de l'étape (a) d'asservissement en trajectoire, on utilise, pour déterminer la consigne de couple conducteur (C_{cond_réf}) à partir de l'écart de trajectoire (Δθ), et plus préférentiellement à partir de l'écart de position (Δθ), une loi (L) de détermination de consigne de couple conducteur qui prend la forme d'une fonction centrée sur la consigne de trajectoire (θ_{réf}), et plus préférentiellement centrée sur la consigne de position (θ_{réf}), et qui associe à toute valeur effective du paramètre de trajectoire (θ), et plus préférentiellement à toute valeur de position effective de la direction (θ), et encore plus préférentiellement à toute valeur d'angle volant représentative de la position angulaire du volant de conduite (3), une consigne de couple conducteur (C_{cond_réf}) correspondante.

6. Procédé selon la revendication 5 **caractérisé en ce que** la fonction représentative de la loi (L) de détermination de consigne de couple conducteur (C_{cond_réf}) est une courbe dite « en S» présentant un domaine central (II) croissant, centré sur la consigne de trajectoire, et plus particulièrement centré sur la consigne de position (θ_{réf}), et de préférence sensiblement linéaire, qui est encadré par deux domaines asymptotiques (I, III) de pente moindre que celle du domaine central (II), voire de pente sensiblement nulle.

7. Procédé selon l'une des revendications précédentes **caractérisé en ce que**, au cours de l'étape (a) d'asservissement en trajectoire, on utilise, pour déterminer la consigne de trajectoire (θ_{réf}), et plus préférentiellement pour déterminer la consigne de position (θ_{réf}), une fonction de pilotage automatique de manoeuvre de stationnement ou une fonction de pilotage automatique de suivi d'une voie de circulation.

8. Support de données lisible par un ordinateur et contenant des éléments de code de programme informatique assurant l'exécution d'un procédé selon l'une des revendications 1 à 7 lorsque ledit support est lu par un ordinateur.

9. Module de gestion de direction assistée **caractérisé en ce qu'**il comprend un module d'asservissement en couple conducteur (6), qui reçoit en entrée d'une part une consigne de couple conducteur (C_{cond_réf}), et d'autre part une mesure du couple conducteur effectif (C_{cond}) qui est réellement exercé, à l'instant considéré, par le conducteur sur le volant de conduite (3), qui évalue un écart de couple conducteur (ΔC_{cond}) qui correspond à la différence entre le couple conducteur effectif (C_{cond}) et ladite consigne de couple conducteur (C_{cond_réf}), et qui fournit en sortie, en fonction dudit écart de couple conducteur, une consigne de couple moteur (C_{mot_réf}), destinée à être appliquée au moteur d'assistance (4) en vue de réduire ledit écart de couple conducteur, ledit module de gestion comprenant également un module d'asservissement en trajectoire (7) qui reçoit en entrée une consigne de trajectoire (θ_{réf}), qui est prédéterminée en fonction d'une trajectoire de référence que l'on souhaite automatiquement faire suivre au véhicule, ainsi qu'une mesure de la valeur effective (θ) d'au moins un paramètre dit « paramètre de trajectoire », qui est représentatif de la trajectoire effective du véhicule, puis qui évalue un écart de trajectoire (Δθ) qui correspond à la différence entre ladite consigne de trajectoire (θ_{réf}) et la valeur effective du paramètre de trajectoire (θ), puis qui fournit en sortie, connectée à l'entrée correspondante du module d'asservissement en couple conducteur, une consigne de couple conducteur (C_{cond_réf}) déterminée à partir de l'écart de trajectoire et destinée à réduire ledit écart de trajectoire.

10. Module de gestion de direction assistée selon la revendication 9 **caractérisé en ce que** le module d'asservissement en trajectoire (7) reçoit en entrée une consigne de position (θ_{réf}), qui est prédéterminée en fonction de la trajectoire de référence que l'on souhaite automatiquement faire suivre au véhicule, ainsi qu'une mesure de la position effective (θ) de la direction assistée, puis évalue un écart de position (Δθ) qui correspond à la différence entre ladite consigne de position (θ_{réf}) et la position effective (θ) de la direction, puis fournit en sortie, connectée à l'entrée correspondante du module d'asservissement en couple conducteur, une consigne de couple conducteur (C_{cond_réf}) déterminée à partir de l'écart de position (Δθ) et destinée à réduire ledit écart de position.

## Patentansprüche

1. Verfahren zur Verwaltung einer Servolenkung, umfassend mindestens ein Lenkrad (3) und mindestens einen Servomotor (4), wobei das Verfahren **dadurch gekennzeichnet ist, dass** es einen Lenkmoment-Regelschritt (b) umfasst, bei dem das effektive Lenkmoment (C_{cond}) gemessen wird, das zu dem betrachteten Zeitpunkt von dem Fahrer auf das Lenkrad (3) tatsächlich ausgeübt wird, dann das effektive Lenkmoment (C_{cond}) mit einem vorbestimmten Lenkmoment-Sollwert (C_{cond_réf}) verglichen wird, um eine Lenkmoment-Abweichung (ΔC_{cond}) zu ermitteln, die der Differenz zwischen dem effektiven Lenkmoment (C_{cond}) und dem Lenkmoment-Sollwert (C_{cond_réf}) entspricht, dann, ausgehend von dieser Lenkmoment-Abweichung, ein Motormoment-Sollwert (C_{mot_réf}) bestimmt wird, der dazu bestimmt ist, auf den Servomotor zwecks Reduzierung der Lenkmoment-Abweichung angewendet zu werden, und dadurch, dass der Lenkmoment-Sollwert (C_{cond_réf}), der beim Lenkmoment-Regelschritt (b) verwendet wird, bei einem Trajektorie-Regelschritt (a) erzeugt wird, bei dem der effektive Wert (θ) mindestens eines Parameters, bezeichnet als "Trajektorie-Parameter", gemessen wird, der für die effektive Trajektorie des Fahrzeugs repräsentativ ist, dann dieser Trajektorie-Parameter (θ) mit einem Trajektorie-Sollwert (θ_{réf}) verglichen wird, der in Abhängigkeit von einer Referenz-Trajektorie, der das Fahrzeug automatisch folgen soll, vorbestimmt wird, um eine Trajektorie-Abweichung (Δθ) zu ermitteln, die der Differenz zwischen dem Trajektorie-Sollwert (θ_{réf}) und dem effektiven Wert des Trajektorie-Parameters (θ) entspricht, dann, ausgehend von dieser Trajektorie-Abweichung (Δθ), ein Lenkmoment-Sollwert (C_{cond_réf}) bestimmt wird, der dazu bestimmt ist, die Trajektorie-Abweichung zu reduzieren.

2. Verfahren nach Anspruch 1, **dadurch gekennzeichnet, dass** beim Trajektorie-Regelschritt (a) die effektive Position (θ) der Servolenkung gemessen wird, dann diese effektive Position (θ) mit einem Positions-Sollwert (θ_{réf}) verglichen wird, der in Abhängigkeit von einer Referenz-Trajektorie, der das Fahrzeug automatisch folgen soll, vorbestimmt wird, um eine Positionsabweichung (Δθ) zu ermittelt, die der Differenz zwischen dem Positions-Sollwert und der effektiven Position der Lenkung entspricht, dann, ausgehend von dieser Positionsabweichung (Δθ), ein Lenkmoment-Sollwert (C_{cond_réf}) bestimmt wird, der dazu bestimmt ist, die Positionsabweichung zu reduzieren.

3. Verfahren nach Anspruch 1 oder 2, **dadurch gekennzeichnet, dass** der Trajektorie-Regelschritt (a) einen Ausgangssättigungs-Unterschritt (a1) umfasst, bei dem der Lenkmoment-Sollwert (C_{cond_réf}) mit einem vorbestimmten zulässigen maximalen Grenzwert (C_{cond_MAX}), bezeichnet als "Lenkmoment-Sättigungsgrenzwert", verglichen wird, und der Lenkmoment-Sollwert (C_{cond_réf}) auf den Wert des Lenkmoment-Sättigungsgrenzwerts (C_{cond_MAX}) begrenzt wird, wenn der Lenkmoment-Sollwert den Sättigungsgrenzwert überschreitet.

4. Verfahren nach Anspruch 3, **dadurch gekennzeichnet, dass** der Lenkmoment-Sättigungsgrenzwert (C_{cond_MAX}) zwischen 1 N.m und 4 N.m, beispielsweise zwischen 2 N.m und 3 N.m, liegt.

5. Verfahren nach einem der vorangehenden Ansprüche, **dadurch gekennzeichnet, dass** beim Trajektorie-Regelschritt (a) zur Bestimmung des Lenkmoment-Sollwerts (C_{cond_réf}) ausgehend von der Trajektorie-Abweichung (Δθ) und vorzugsweiser ausgehend von der Positionsabweichung (Δθ) ein Lenkmoment-Sollwert-Bestimmungsverlauf (L) verwendet wird, der die Form einer Funktion annimmt, die auf den Trajektorie-Sollwert (θ_{réf}) zentriert ist und vorzugsweiser auf den Positions-Sollwert (θ_{réf}) zentriert ist und der jedem effektiven Wert des Trajektorie-Parameters (θ) und vorzugsweiser jedem effektiven Positionswert der Lenkung (θ) und noch vorzugsweiser jedem Lenkradwinkelwert, der für die Winkelposition des Lenkrads (3) repräsentativ ist, einen entsprechenden Lenkmoment-Sollwert (C_{cond_réf}) zuordnet.

6. Verfahren nach Anspruch 5, **dadurch gekennzeichnet, dass** die repräsentative Funktion des Bestimmungsverlaufs (L) des Lenkmoment-Sollwerts (C_{cond_réf}) eine sogenannte "S"-Kurve ist, die einen zentralen ansteigenden Bereich (II) aufweist, der auf dem Trajektorie-Sollwert zentriert ist und insbesondere auf dem Positions-Sollwert (θ_{réf}) zentriert und vorzugsweise im Wesentlichen linear ist, der von zwei asymptotischen Bereichen (I, III) geringerer Neigung als die des zentralen Bereichs (II), ja sogar mit einer Neigung von im Wesentlichen Null, eingefasst ist.

7. Verfahren nach einem der vorangehenden Ansprüche, **dadurch gekennzeichnet, dass** beim Trajektorie-Regelschritt (a) zur Bestimmung des Trajektorie-Sollwerts (θ_{réf}) und vorzugsweiser zur Bestimmung des Positions-Sollwerts (θ_{réf}) eine automatische Parkmanöver-Steuerfunktion oder eine automatische Fahrweg-Nachverfolgungs-Steuerfunktion verwendet wird.

8. Rechnerlesbarer Datenträger, IT-Programmcodeelemente enthaltend, der die Ausführung eines Verfahrens nach einem der Ansprüche 1 bis 7 sichert, wenn der Träger von einem Rechner gelesen wird.

9. Modul zur Verwaltung einer Servolenkung, **dadurch gekennzeichnet, dass** es ein Lenkmoment-Regelmodul (6) umfasst, das am Eingang zum einen einen Lenkmoment-Sollwert (C_{cond_réf}) und zum anderen eine Messung des effektiven Lenkmoments (C_{cond}) empfängt, das zu dem betrachteten Zeitpunkt von dem Fahrer auf das Lenkrad (3) tatsächlich ausgeübt wird, das eine Lenkmoment-Abweichung (ΔC_{cond}) ermittelt, die der Differenz zwischen dem effektiven Lenkmoment (C_{cond}) und dem Lenkmoment-Sollwert (C_{cond_réf}) entspricht, und das am Ausgang in Abhängigkeit von der Lenkmoment-Abweichung einen Motormoment-Sollwert (C_{mot_réf}) bereitstellt, der zur Anwendung auf den Servomotor (4) zwecks Reduzierung der Lenkmoment-Abweichung bestimmt ist, wobei das Verwaltungsmodul ebenfalls ein Trajektorie-Regelmodul (7) umfasst, das am Eingang einen Trajektorie-Sollwert (θ_{réf}) empfängt, der in Abhängigkeit von einer Referenz-Trajektorie, der das Fahrzeug automatisch folgen soll, vorbestimmt wird, sowie eine Messung des effektiven Werts (θ) mindestens eines Parameters, bezeichnet als "Trajektorie-Parameter", der für die effektive Trajektorie des Fahrzeugs repräsentativ ist, das dann eine Trajektorie-Abweichung (Δθ) ermittelt, die der Differenz zwischen dem Trajektorie-Sollwert (θ_{réf}) und dem effektiven Wert des Trajektorie-Parameters (θ) entspricht, das dann am Ausgang, der mit dem entsprechenden Eingang des Lenkmoment-Regelmoduls verbunden ist, einen Lenkmoment-Sollwert (C_{cond_réf}) bereitstellt, der ausgehend von der Trajektorie-Abweichung bestimmt wird und dazu bestimmt ist, die Trajektorie-Abweichung zu reduzieren.

10. Modul zur Verwaltung einer Servolenkung nach Anspruch 9, **dadurch gekennzeichnet, dass** das Trajektorie-Regelmodul (7) am Eingang einen Positions-Sollwert (θ_{réf}) empfängt, der in Abhängigkeit von einer Referenz-Trajektorie, der das Fahrzeug automatisch folgen soll, vorbestimmt wird, sowie eine Messung der effektiven Position (θ) der Servolenkung, dann eine Positionsabweichung (Δθ) ermittelt, die der Differenz zwischen dem Positions-Sollwert (θ_{réf}) und der effektiven Position (θ) der Lenkung entspricht, dann am Ausgang, der mit dem entsprechenden Eingang des Lenkmoment-Regelmoduls verbunden ist, einen Lenkmoment-Sollwert (C_{cond_réf}) bereitstellt, der ausgehend von der Positionsabweichung (Δθ) bestimmt wird und dazu bestimmt ist, die Positionsabweichung zu reduzieren.

## Claims

1. A method for managing a power steering comprising at least one steering wheel (3) and at least one assist motor (4), said method being **characterized in that** it comprises a driver torque control step (b), comprising measuring the effective driver torque (C_{cond}) which is actually exerted, at the considered instant, by the driver on the steering wheel (3), and then comparing said effective driver torque (C_{cond}) to a predetermined driver torque setpoint (C_{cond_réf}) in order to assess a driver torque deviation (ΔC_{cond}) which corresponds to the difference between the effective driver torque (C_{cond}) and said driver torque setpoint (C_{cond_réf}), and then determining, from this driver torque deviation, a motor torque setpoint (C_{mot_réf}) intended to be applied to the assist motor in order to reduce said driver torque deviation, and **in that** the driver torque setpoint (C_{cond_réf}) which is used during the driver torque control step (b) is generated during a path control step (a) that comprises measuring the effective value (θ) of at least one parameter called « path parameter », which is representative of the effective path of the vehicle, and then comparing this path parameter (θ) to a path setpoint (θ_{réf}), which is predetermined depending on a reference path that the vehicle is desired to follow automatically, in order to assess a path deviation (Δθ) which corresponds to the difference between said path setpoint (θ_{réf}) and the effective value of the path parameter (θ), and then determining, from this path deviation (Δθ), a driver torque setpoint (C_{cond_réf}) intended to reduce said path deviation.

2. The method according to claim 1, **characterized in that**, during the path control step (a), the effective position (θ) of the power steering is measured, and then this effective position (θ) is compared to a position setpoint (θ_{réf}), which is predetermined depending on a reference path that the vehicle is desired to follow automatically, in order to assess a position deviation (Δθ) which corresponds to the difference between said position setpoint and the effective position of the power steering, and then, from this position deviation (Δθ), a driver torque setpoint (C_{cond_réf}), intended to reduce said position deviation, is determined.

3. The method according to claim 1 or 2, **characterized in that** the path control step (a) comprises an output saturation substep (a1) comprising comparing the driver torque setpoint (C_{cond_réf}) to a predetermined admissible maximum threshold (C_{cond_MAX}), called « driver torque saturation threshold », and limiting the driver torque setpoint (C_{cond_réf}) to the value of said driver torque saturation threshold (C_{cond_MAX}) if said driver torque setpoint exceeds said saturation threshold.

4. The method according to claim 3, **characterized in that** the driver torque saturation threshold (C_{cond_MAX}) is comprised between 1 N.m and 4 N.m, for example between 2 N.m and 3 N.m.

5. The method according to any of the preceding claims, **characterized in that** the path control step (a) comprises using a driver torque setpoint determination law (L), in order to determine the driver torque setpoint (C_{cond_réf}) from the path deviation (Δθ), and more preferably from the position deviation (Δθ), wherein said driver torque setpoint determination law (L) is in the form of a function centered on the path setpoint (θ_{réf}), and more preferably centered on the position setpoint (θ_{réf}), and associates to every effective value of the path parameter (θ), and more preferably to every effective position value of the steering (θ), and still more preferably to every steering wheel angle value representative of the angular position of the steering wheel (3), a corresponding driver torque setpoint (C_{cond_réf}).

6. The method according to claim 5, **characterized in that** the function that is representative of the driver torque setpoint (C_{cond_réf}) determination law (L) is a curve called « S-shaped » curve presenting an increasing central domain (II) which is centered on the path setpoint, and more particularly centered on the position setpoint (θ_{réf}), and which is preferably substantially linear, wherein said increasing central domain (II) is surrounded by two asymptotic domains (I, III) with a slope that is lesser than the slope of the central domain (II), or even with a slope that is substantially zero.

7. The method according to any of the preceding claims, **characterized in that** the path control step (a) comprises using an automatic piloting function for parking maneuver or an automatic piloting function for following a traffic lane, in order to determine the path setpoint (θ_{réf}), and more preferably in order to determine the position setpoint (θ_{réf}),.

8. A data medium readable by a computer and containing computer program code elements ensuring the execution of a method according to any of claims 1 to 7 when said medium is read by a computer.

9. A power steering management module **characterized in that** it comprises a driver torque control module (6), which receives in input, on the one hand, a driver torque setpoint (C_{cond_réf}) and, on the other hand, a measurement of the effective driver torque (C_{cond}) which is actually exerted, at the considered instant, by the driver on the steering wheel (3), which assesses a driver torque deviation (ΔC_{cond}) which corresponds to the difference between the effective driver torque (C_{cond}) and said driver torque setpoint (C_{cond_réf}), and which provides, in output, depending on said driver torque deviation, a motor torque setpoint (C_{mot_réf}), intended to be applied to the assist motor (4) in order to reduce said driver torque deviation, said management module also comprising a path control module (7) which receives, in input, a path setpoint (θ_{réf}) which is predetermined depending on a reference path that the vehicle is desired to follow automatically, as well as a measurement of the effective value (θ) of at least one parameter called « path parameter », which is representative of the effective path of the vehicle, and wherein said path control module then assesses a path deviation (Δθ) which corresponds to the difference between said path setpoint (θ_{réf}) and the effective value of the path parameter (θ), and then provides, in output, connected to the corresponding input of the driver torque control module, a driver torque setpoint (C_{cond_réf}) determined from the path deviation and intended to reduce said path deviation.

10. The power steering management module according to claim 9, **characterized in that** the path control module (7) receives, in input, a position setpoint (θ_{réf}) which is predetermined depending on the reference path that the vehicle is desired to follow automatically, as well as a measurement of the effective position (θ) of the power steering, and then assesses a position deviation (Δθ) which corresponds to the difference between said position setpoint (θ_{réf}) and the effective position (θ) of the power steering, and then provides, in output, connected to the corresponding input of the driver torque control module, a driver torque setpoint (C_{cond_réf}) determined from the position deviation (Δθ) and intended to reduce said position deviation
